# EUROPÄISCHE PATENTSCHRIFT

(11) **EP 2 656 540 B1**
(45) Veröffentlichungstag und Bekanntmachung des Hinweises auf die Patenterteilung: **10.09.2014**
(21) Anmeldenummer: 11784966.1
(22) Anmeldetag: 03.11.2011
(51) Int. Cl.: H04L 12/12

(54) **VERFAHREN UND VORRICHTUNG ZUR ENERGIESPARENDEN KOMMUNIKATION IN DER GEBÄUDEAUTOMATION**
METHOD AND DEVICE FOR THE ENERGY-SAVING COMMUNICATION IN BUILDING AUTOMATION
PROCÉDÉ ET DISPOSITIF DE COMMUNICATION ÉCONOME EN ÉNERGIE DANS L'AUTOMATISATION IMMOBILIÈRE

(30) Priorität: 20.12.2010 DE 102010055169
(43) Veröffentlichungstag der Anmeldung: 30.10.2013
(73) Patentinhaber: RWE Effizienz GmbH, 44139 Dortmund (DE); EQ-3 AG, 26789 Leer (DE)
(72) Erfinder: LUX, Daniel, 9520 Skorping (DK); HELM, Christian, 26532 Großheide (DE); DANKE, Enno, München 81373 (DE); GROHMANN, Bernd, 26135 Oldenburg (DE)
(74) Vertreter: Cohausz & Florack
(86) Internationale Anmeldenummer: PCT/EP2011/069276
(87) Internationale Veröffentlichungsnummer: WO 2012/084318

(56) Entgegenhaltungen:
- EP-A1- 1 657 852
- WO-A2-2010/018521
- AMRE EL-HOIYDI ET AL: "WiseMAC: An Ultra Low Power MAC Protocol for Multi-hop Wireless Sensor Networks", 22. Juni 2004 (2004-06-22), ALGORITHMIC ASPECTS OF WIRELESS SENSOR NETWORKS; [LECTURE NOTES IN COMPUTER SCIENCE;;LNCS], SPRINGER-VERLAG, BERLIN/HEIDELBERG, PAGE(S) 18 - 31, XP019008766, ISBN: 978-3-540-22476-1 Zusammenfassung Vorletzter Satz auf Seite 1 Abschnitt "3 WiseMAC"

## Beschreibung

Der Gegenstand betrifft ein Verfahren sowie ein System der Gebäudeautomation bei dem Nutzdaten von einem Empfänger an einen Sender übertragen werden.

Systeme zur Heimautomatisierung sind hinlänglich bekannt. So ist zum Beispiel unter der Bezeichnung EIB/KNX ein kabelgebundenes Heimautomatisierungssystem bekannt, bei dem über einen seriellen Bus Nachrichten zwischen Sensoren und Aktoren ausgetauscht und entsprechend vorgebbarer Regeln (Parameter) elektrische Verbraucher gesteuert werden. Ein solches Bussystem erfordert jedoch eine aufwändige Verkabelung, die fast ausschließlich bei einem Neubau realisierbar ist.

Bei der Nachrüstung von Heimautomatisierungslösungen in bestehende Elektroinstallationen eignen sich insbesondere funkbetriebene Lösungen. Hierbei kommunizieren Sensoren und Aktoren sowie ggf. zentrale Steuerrechner über Hochfrequenzfunk. Da bei der Nachrüstung jedoch an vielen Stellen, an denen Sensoren oder Aktoren eingesetzt werden, keine Stromversorgung vorhanden ist, sind zumindest energetisch eigengespeiste Sensoren (z.B. mittels Batterien, Kondensatoren, etc.) notwendig. Bei den eigengespeisten Sensoren ist der Stromverbrauch jedoch ein entscheidendes Kriterium für die Dauer des Betriebs des Sensors mit einer einzigen Batterie. Sensoren, die ununterbrochen mit Aktoren und zentralen Steuerrechnern kommunizieren oder in regelmäßigen Abständen mit den Aktoren bzw. den zentralen Steuerrechnern kommunizieren, verbrauchen unnötig viel Strom.

Die EP 1 657 852 A1 betrifft ein energieeffizientes MACbasiertes Drahtlosnetzwerk aus mehreren Knoten, welche als Empfänger oder Sender ausgestaltet sein können. Zur Kommunikation wacht hierbei der Empfänger (destination node) periodisch für eine kurze Zeit TL innerhalb eines Aufwachintervalls TPL auf und lauscht nach einem wake-up Signal WU eines Senders (source node), wobei das wake-up Signal WU zunächst über die gesamte Dauer des Aufwachintervalls gesendet wird (TPL = TWU). Wird ein Signalblock von einem Sender detektiert, werden Sender und Empfänger mit Hilfe der Kommunikationsinformationen synchronisiert und die Datenübertragung kann erfolgen. Wird hingegen während eines Aufwachzeitraums TL kein Signalblock SB vom Sender detektiert, fällt dieser wieder in den Schlafmodus zurück.

Nachteilig bei bekannten Systemen ist, dass die Stromaufnahme und daher die benötigte Energie zum Betrieb eines Funkempfängers so hoch ist, dass dieser bei batteriebetriebenen Geräten nicht permanent eingeschaltet bleiben kann. Dies gilt insbesondere bei Geräten, bei denen eine möglichst lange Batterielebensdauer gewünscht wird, häufig mehrere Jahre und insbesondere bei Geräten mit Funkdatenübertragung für die Frequenzbänder bei 2,4 GHz, bei 868 MHz und 433 MHz.

In vielen Anwendungen wird diese Aufgabe dadurch weiter kompliziert, dass auch das sendende bzw. die bei bidirektionaler Funk-Kommunikation das den Kommunikationsvorgang initiierende Gerät ebenfalls energetisch eingespeist ist.

Eine der simpelsten Lösungen ist, dass der Empfänger den Sender bzw. das initiierende Gerät in einem festen oder variablen Intervall regelmäßig fragt, ob Daten zu senden sind. Dies wird als Polling bezeichnet. Natürlich wird erhebliche Energie beim Empfänger für das Polling benötigt und zusätzlich erhöht die Intervalldauer die Latenzzeit für eine spontane Datenübertragung vom Sender zum Empfänger.

Bei regelmäßiger Datenkommunikation ist es üblich, dass Sender und Empfänger zeitlich synchronisiert sind und der Sender in einem festen zeitlichen Intervall Daten sendet.

Die Veröffentlichungen DE 10 2006 034 066 A1 und DE 10 2006 034 063 A1 zeigen darüber hinaus, wie die erheblichen Nachteile einer solchen zyklischen Datenübertragung mit einem festen zeitintervall vermieden werden können und wie eine für nicht an der Kommunikation beteiligte Geräte pseudo-zufällige Intervalldauer erreicht werden kann.

Eine andere Form der Organisation der Kommunikation ist die Verwendung eines Geräts, das in zeitlich konstanten Abständen einen "Beacon" aussendet. Ein Beacon ist ein besonderes, per Funk übertragenes Datenpaket einer zentralen Station, auf das sich alle beteiligten batteriebetriebenen Funkdatenempfänger synchronisieren. Die Kommunikation zwischen den Geräten wird dann immer unmittelbar nach dem Empfang des Beacons nach einem der bekannten Verfahren zur Koordination des Kanalzugangs - z.B. CSMA/CA - durchgeführt. Empfänger welche die Synchronität verlieren, können durch dauerhaftes Einschalten des Empfängers bis zum Eintreffen des nächsten Beacons wieder synchronisiert werden. Der Nachteil des Beacons ist aber ebenso offensichtlich: Es ist ein in der Reichweite von allen Empfängern liegender Beacon-Sender - oft auch "Master" genannt - notwendig.

Aber auch bei diesen Lösungen ist eine spontane Datenübertragung zum energetisch eigengespeisten Gerät im Mittel stets durch die Intervalldauer zwischen zwei Beacons verzögert.

Aufgrund der genannten Nachteile wurden so genannte "Burst-Wakeup" Verfahren entwickelt. Bei diesen Verfahren wacht ein Empfänger in einem festen zeitlichen Aufwachintervall (Burst-Intervall) für eine sehr kurze Dauer auf, um zu überprüfen, ob ein Sender gerade eine Erkennungsbitfolge (Burst-Präambel), ggf. zusammen mit Nutzdaten (Burst-Wakeup Paket) sendet. Eine Erkennungsbitfolge ist eine Präambel, d.h. eine definierte Bitfolge, z.B. 010101..., vor dem Beginn der eigentlichen Nutzdaten. Bei den bekannten Verfahren ist die Erkennungsbitfolge sehr stark verlängert, um sicherzustellen, dass innerhalb eines Aufwachintervalls vom Empfänger zumindest einen Teil der Erkennungsbitfolge detektiert werden kann.

Sofern der Empfänger innerhalb (zu Beginn, während oder am Ende) des Aufwachintervalls - beim Aufwachen - auf dem Funkkanal keine Burst-Präambel detektiert, wird der RF-Transceiver des Empfängers sofort wieder abgeschaltet, um Energie zu sparen. Der Empfänger wird für restliche die Dauer des Aufwachintervalls in einen Energiesparmodus (Sleep-Modus) versetzt und wacht erst im nächsten Burst-Intervall wieder auf.

Wenn der Empfänger beim Aufwachen eine Burst-Präambel detektiert, bleibt der Empfänger wach, bis die eigentlichen Nutzdaten folgen und empfängt diese. Oft folgen darauf weitere Kommunikationsvorgänge. Das detektieren der Burst-Präambel erfordert empfängerseitig die Detektion der definierten Bitfolge. Hierzu muss nur ein sehr kurzer Abschnitt der Burst-Präambel im Empfänger empfangen werden. Es reicht aus, wenn der Empfänger nur wenige Bits der gesamten Burst-Präambel empfängt, solange der Empfänger anhand dieser Bits feststellen kann, dass es sich hierbei um Teile der gesamten Burst-Präambel handelt.

Wenn nun die Dauer der Burst-Präambel mindestens so lang ist, wie das Aufwachintervall (Burst-Intervall), kann eine geregelte Kommunikation erfolgen, d.h. wenn keine anderen Störungen im Funkkanal auftreten. Dies ist der Fall, weil dann der Empfänger in jedem Fall in einem Burst-Intervall einen Teil der Burst-Präambel empfängt.

Dieses Burst-Verfahren ist von besonderem Interesse, da der durchschnittliche Stromverbrauch aufgrund des nur kurzen regelmäßigen Aufwachens relativ niedrig ist. Aus diesem Grunde finden sich in einschlägigen Implementierungen von Funk-Transceivern bereits Schaltungen, die das Verfahren des Burst-Wakeup automatisch ausführen, d.h. ohne dass der Mikrocontroller des Empfängers seinen Sleep-Modus verlassen muss, bevor ein gültiges Datenpaket mit einer Burst-Präambel empfangen wurde. Dies führt zu weiteren Energieeinsparungen auf der Seite des Empfängers, da die Mikrocontroller des Empfängers nur dann aus dem Sleep-Modus aktiviert wird, wenn der Funk-Transceiver bereits festgestellt hat, dass eine Funkkommunikation mit dem Sender stattfinden soll.

Für viele Applikationen wäre es aber wünschenswert, den durchschnittlichen Stromverbrauch noch weiter zu senken. Hierzu müsste das Burst-Intervall verlängert werden. Dann müsste aber auch die Burst-Präambel zum "Aufwecken" des Empfängers länger werden, um sicherzustellen, dass der Empfänger sicher während eines Burst-Intervalls auch einen Teil der Burst-Präambel detektiert.

Der Nachteil des Burst-Verfahrens ist jedoch, dass das Burst-Wakeup Paket für unbeteiligte Geräte eine Störung des Funkkanals mit einer Dauer des Burst-Intervalls darstellt. Es ist daher wünschenswert, die Dauer des Burst-Pakets zeitlich möglichst eng zu begrenzen, d.h. auch um Kanal-Zugangsverfahren wie CSMA/CA möglichst wenig zu behindern.

Ausgehend von den genannten Nachteilen lag dem Gegenstand die Aufgabe zugrunde, eine weitere Energieeinsparung durch Verlängerung des Burst-Intervalls zu erreichen, ohne den Übertragungskanal weiter zu belasten.

Diese Aufgabe wird durch einen Verfahren nach Anspruch 1 gelöst.

Hierbei wird vorgeschlagen, zunächst eine Erkennungsbitfolge zu erzeugen. Erzeugen kann ein generieren oder Auslesen aus einem Speicher sein. Diese Erkennungsbitfolge ist in der Regel als Burst-Präambel gebildet. Insofern kann die Erkennungsbitfolge ein sich wiederholendes Bitmuster aufweisen, welches in dieser Form in den Nutzdaten bevorzugt nicht enthalten sein kann. Somit ist es für einen Empfänger der Erkennungsbitfolge möglich, beim Empfang zumindest eines Teils der Erkennungsbitfolge zu erkennen, dass es sich um die Erkennungsbitfolge handelt und ggf. die sich daran anschließenden Nutzdaten empfangen und den Mikroprozessor aktivieren.

Auch wird vorgeschlagen, dass die Erkennungsbitfolge in einem ersten Zeitschlitz und in einem zweiten, zeitlich von dem ersten Zeitschlitz entfernten Zeitschlitz übermittelt wird. Somit wird gegenständlich vorgeschlagen, dass zumindest zwei Erkennungsbitfolgen in zwei voneinander getrennten Zeitschlitzen übertragen werden. Zwischen den jeweiligen Zeitschlitzen findet keine Übertragung einer Erkennungsbitfolge statt. Es sei angemerkt, dass bei einer Permutation über N-Zeitschlitze auch Situationen auftreten, bei denen zwei Burst-Präambeln nacheinander folgen können. Im Grunde wird aber versucht, möglichst zumindest einen Zeitschlitz Abstand zwischen zwei Burst-Präambeln zu warten. Unmittelbar an dem ersten oder dem zweiten Zeitschlitz anschließend kann eine Nutzdatenübertragung erfolgen, so in einem Zeitschlitz die Burst-Präambel und vorzugsweise auch im Zeitschlitz oder unmittelbar daran anschließend Nutzdaten übertragen werden.

Beim Übertragen der Erkennungsbitfolge ist es auch bevorzugt, dass der Zeitschlitz so lang gewählt wird, dass er genau für die Übertragung der Erkennungsbitfolge ausreicht. Somit entspricht bevorzugt die Dauer des Sendens der Erkennungsbitfolge der Länge des Zeitschlitzes. Anders als bei bekannten Burst-Wakeup-Verfahren wird vorgeschlagen, dass die Dauer des Sendens der Erkennungsbitfolge kürzer ist, als das Aufwachintervall eines Empfängers. Das bedeutet, dass nicht, wie bei bekannten Burst-Wakeup-Verfahren, die Burst-Präambel zumindest so lange ist, wie das Aufwachintervall, um sicherzustellen, dass ein Empfänger innerhalb des Aufwachintervalls zumindest einen Teil der Burst-Präambel empfängt. Vielmehr wird vorgeschlagen, dass ein Zeitschlitz bzw. die Dauer des Sendens der Erkennungsbitfolge, kürzer ist als ein Aufwachintervall.

Darüber hinaus wird vorgeschlagen, dass die Dauer des Sendens der Summe der ersten und zumindest zweiten Erkennungsbitfolge zumindest der Dauer des Aufwachintervalls des Empfängers entspricht. Somit ist bevorzugt die Summe der Zeitschlitze zumindest so lang, wie das Aufwachintervall. Statt eines langen Pakets mit einer langen Burst-Präambel zu versenden, wie es im Stand der Technik vorgeschlagen wird, wird gegenständlich versucht, Sendeversuche mit kurzer Burst-Präambel für jeden Zeitschlitz zu unternehmen. Hierzu werden Pakete gesendet, bei denen die Burst-Präambel nicht die Dauer des Aufwachintervalls des Empfängers hat, sondern nur die Dauer eines Zeitschlitzes.

Um sicherzustellen, dass bei dem beanspruchten Verfahren auch die Übertragung von Nutzdaten erfolgt, wird vorgeschlagen, dass mit jeder Erkennungsbitfolge auch im unmittelbaren Anschluss Nutzdaten übertragen werden. Die Menge der zu übertragenden Nutzdaten bestimmt sich aus dem Abstand der Zeitschlitze zueinander. So ist es nur möglich, dass bei jedem Sendeversuch das erste Nutzdatenpaket nur so groß ist, dass es in einem Absatz zwischen zwei Zeitschlitzen übertragen werden kann.

Der Abstand der Zeitschlitze zueinander ist vorzugsweise lediglich sendeseitig bekannt.

Vorzugsweise wird ein Aufwachintervall in mehrere Zeitschlitze unterteilt. Vorzugsweise wird ein Aufwachintervall in N Zeitschlitze unterteilt und permutierend über alle N Zeitschlitze, jeweils zumindest in einem der Zeitschlitze eine Burst-Präambel übertragen. Eine Übertragung einer Erkennungsbitfolge erfolgt vorzugsweise in nur einem der mehreren Zeitschlitze pro Aufwachintervall. Die Auswahl, in welchem der Zeitschlitze innerhalb des Aufwachintervalls die Übertragung der Erkennungsbitfolge erfolgt, ist vorzugsweise permutierend, so dass bei einer beispielhaften Aufteilung des Aufwachintervalls in drei Zeitschlitze nach dem Ablauf von drei Aufwachintervallen in jedem der drei Zeitschlitze jeweils einmal eine Erkennungsbitfolge übertragen wurde. Dies stellt sicher, dass nach Ablauf der beispielhaften drei Aufwachintervalle im gesamten Aufwachintervall eine Erkennungsbitfolge übertragen wurde. Die Übertragung ist dann jedoch zeitlich gestreckt über drei Aufwachintervalle. Ein Sendeversuch erfolgt somit in jedem der Zeitschlitze, wenn auch über eine größere zeitliche Distanz. Hierdurch wird sichergestellt, dass der Empfänger auf jeden Fall erfährt, dass ein Sendeversuch stattgefunden hat.

Das Aufwachintervall des Empfängers und die Zeitintervalle der Zeitschlitze müssen nicht synchronisiert sein. Empfängerseitig kann die Folge der Zeitschlitze unbekannt sein und lediglich der Sender muss die Zeiten der Zeitschlitze kennen. Dies kann beispielsweise mittels eines senderseitigen Timers überwacht werden.

Gemäß einem vorteilhaften Ausführungsbeispiel wird vorgeschlagen, dass unmittelbar im Anschluss an das erste Senden einer Burst-Präambel zumindest ein Nutzdatenpaket gesendet wird, wobei die Dauer des Sendens der Nutzdaten kürzer als der zeitliche Abstand zwischen den Zeitschlitzen, in denen Burst-Präambeln versendet werde, ist. Dadurch, dass unmittelbar im Anschluss an den Zeitschlitz mit der Erkennungsbitfolge das Nutzdatenpaket übertragen wird, wird sichergestellt, dass die Nutzdaten möglichst unmittelbar im Anschluss an die Aktivierung eines Empfängers übertragen werden. Ferner wird dadurch, dass die Dauer des Sendens der Nutzdaten kürzer ist als der zeitliche Abstand zwischen den Zeitschlitzen für die Übertragung der Erkennungsbitfolge sichergestellt, dass es keine Überschneidung zwischen den Nutzdaten und der folgenden Erkennungsbitfolge gibt.

Gemäß einem vorteilhaften Ausführungsbeispiel wird vorgeschlagen, dass zumindest N-Mal eine Erkennungsbitfolge in jeweils einem Zeitschlitz gesendet wird, wobei die Zeitschlitze in zumindest N-1 verschiedenen Aufwachintervallen des Empfängers liegen (N ist eine natürliche Zahl). Dabei ist es auch möglich, dass ein Aufwachintervall in N Zeitschlitze unterteilt wird und jeweils in nur einem der N Zeitschlitze eine Erkennungsbitfolge übertragen wird. So wird beispielsweise bei N=3 permutierend zunächst in einem ersten Aufwachintervall die Erkennungsbitfolge in Zeitschlitz A übertragen, in einem zweiten Aufwachintervall in einem Zeitschlitz C und in einem dritten Aufwachintervall in einem Zeitschlitz B. Die Zeitschlitze A, B, C folgen unmittelbar aufeinander und die Dauer der Summe der Zeitschlitze A+B+C entspricht der Dauer eines Aufwachintervalls.

Es kann vorkommen, dass ein Empfänger aufgrund anderer Aktivitäten in einem Aufwachintervall aktiv ist und aktiv an der Kommunikation teilnimmt und somit die Nutzdaten mit der Burst-Präambel in jedem der Zeitschlitze empfängt. Um zu verhindern, dass der Empfänger jedes der Nutzdatenpakete auswertet, wird vorgeschlagen, dass den Nutzdatenpakete Sequenznummern zugeordnet werden. Ein Nutzdatenpaket kann, wie zuvor beschrieben, mehrfach in unterschiedlichen Zeitschlitzen übertragen werden. Bleibt die Sequenznummer für diese Nutzdatenpakete gleich, kann der Empfänger anhand der Sequenznummern feststellen, dass es sich um eine Mehrfachübertragung handelt und, sobald das Nutzdatenpaket einmal ausgewertet wurde, die weiteren empfangenen Nutzdatenpakete verwerfen. Die Sequenznummer kann Teil der Erkennungsbitfolge sein oder aber zu Beginn eines jeden Nutzdatenpakets übertragen werden.

Häufig wird seitens des Empfängers eine kurze Empfangsbestätigung (ACK) an den Sender übermittelt, sobald ein Nutzdatenpaket empfangen wurde. Wird senderseitig eine solche Empfangsbestätigungsnachricht empfangen, kann der Sendeversuch für das jeweilige Nutzdatenpaket unterbrochen werden. Das heißt, dass wenn beispielsweise das Nutzdatenpaket schon im ersten Aufwachintervall empfangen wurde, kann das Übertragen in den Zeitschlitzen der darauffolgenden Aufwachintervalle entfallen. Bei dem oben genannten Beispiel wäre eine Empfangsbestätigungsnachricht im Anschluss an den Zeitschlitz A ein Indiz dafür, dass die Zeitschlitze B und C in den darauffolgenden Aufwachintervallen nicht mehr genutzt werden müssten, um das Nutzdatenpaket zu übertragen.

Für eine Übertragung der Nutzdaten an einen oder mehrere Empfänger ist es möglich, dem Nutzdatenpaket eine Zieladresse zuzuordnen und diese Zieladresse zusammen mit den Nutzdaten oder der Burst-Präambel zu übertragen. So ist es beispielsweise möglich, eine Mehrzahl von Zieladressen dem Nutzdatenpaket zuzuordnen, so dass die Nutzdaten von mehreren Empfängern empfangen und ausgewertet werden. Beim Empfang eines Nutzdatenpakets, welches für mehrere Empfänger gedacht ist, gleichzeitig in mehreren Empfängern, kann die darauffolgende Übertragung der Empfangsbestätigungsnachricht oder weiterer Datenkommunikationen zwischen Sender und Empfänger mittels geeigneter Verfahren für den Zugriff auf den Funkkanal koordiniert sein, um Kollisionen der ACK Nachrichten von den Empfängern zu vermeiden. Beispielsweise kann hier CSMA/CA zum Einsatz kommen. Sobald von allen Empfängern Empfangsbestätigungsnachrichten empfangen wurden, kann das Übertragen der Erkennungsbitfolge in weiteren Aufwachintervallen entfallen.

Verschiedene Nutzdatenpakete könnten unterschiedliche Wichtigkeit haben. Sehr wichtige Nutzdatenpakete sollten möglichst schnell beim Empfänger empfangen werden, wohingegen weniger wichtige Nutzdatenpakete auch erst zu einem späteren Zeitpunkt beim Empfänger empfangen werden können. Je kürzer die Zeitschlitze sind, d.h. in je mehrere Zeitschlitze ein Aufwachintervall unterteilt ist, desto länger kann es dauern, dass ein Zeitschlitz, in dem eine Erkennungsbitfolge übertragen wird, mit dem Moment koinzidiert, indem der Empfänger aufwacht und das Vorhandensein der Erkennungsbitfolge überprüft. Wenn das Aufwachintervall in nur zwei Zeitschlitze unterteilt wird, wird empfängerseitig spätestens im zweiten Aufwachintervall die Erkennungsbitfolge empfangen und die Nutzdaten können dann empfangen werden. Daher wird vorgeschlagen, dass einen Nutzdatenpaket eine Wertigkeit zugeordnet wird und dass abhängig von der Wertigkeit die Anzahl N der Zeitschlitze pro Aufwachintervall eingestellt wird. Vorzugsweise ist N reziprok zur Wertigkeit.

Vorzugsweise wird vorgeschlagen, dass die Dauer der Zeitschlitze der Dauer des Sendens der Erkennungsbitfolge entspricht. Dies bewirkt, dass die zur Verfügung stehende Zeit optimal genutzt wird. Pro Zeitschlitz wird genau eine Erkennungsbitfolge übertragen.

Auch wird vorgeschlagen, dass die Dauer der Zeitschlitze sowie die Länger der Erkennungsbitfolge variabel ist. Somit ist es beispielsweise möglich, für wichtige Nutzdaten die Dauer der Zeitschlitze zu erhöhen und somit die Empfangswahrscheinlichkeit seitens des Empfängers zu vergrößern.

Auch ist es möglich, dass der Abstand zwischen den Zeitschlitzen, in denen Burst-Präambeln übertragen werden, äquidistant gewählt ist. Bei einer beispielhaften Aufteilung des Aufwachintervalls in drei Zeitschlitze kann beispielsweise eine Übertragung einer Erkennungsbitfolge in jedem zweiten Zeitschlitz erfolgen.

Eine Synchronisation zwischen dem empfängerseitigen Aufwachintervall und den senderseitigen Zeitschlitzen ist nicht notwendig. So ist der Beginn und das Ende eines Aufwachintervalls auf Seiten des Empfängers völlig unabhängig vom Beginn eines Zeitschlitzes auf Seiten des Senders. Lediglich die Dauer des Aufwachintervalls muss senderseitig bekannt sein, um senderseitig die Anzahl und die Dauer der Zeitschlitze bestimmen zu können.

Auch wird vorgeschlagen, dass die Anzahl der Zeitschlitze, deren Dauer in Summe zumindest der Dauer des Aufwachsintervalls entspricht, variabel ist. Mit Hilfe dieser Variabilität ist es möglich, unterschiedlichen Wertigkeiten von Nutzdaten Rechnung zu tragen und für wichtige Nutzdaten möglichst lange Zeitschlitze zu verwenden und für unwichtige Nutzdaten kürzere Zeitschlitze zu verwenden. Bei den kürzeren Zeitschlitzen ist die Wahrscheinlichkeit, dass diese in dem Moment empfängerseitig empfangen werden, indem der Empfänger auf das Vorhandensein einer Erkennungsbitfolge lauscht, geringer.

In der Erkennungsbitfolge können Zusatzinformationen enthalten sein. Diese können beispielsweise Informationen über die verbleibende Dauer der Erkennungsbitfolge bis zum Beginn des Nutzdatenpaketes enthalten. In diesem Fall kann ein Empfänger, der eine Erkennungsbitfolge empfängt und die verbleibende Dauer der Erkennungsbitfolge ermittelt, unmittelbar wieder inaktiv werden und erst zum Zeitpunkt des Übertragens des Nutzdatenpaketes automatisch aufwachen. Dies spart Energie für die Restdauer der Erkennungsbitfolge. Auch kann die laufende Nummer des Zeitschlitzes enthalten sein. Hierdurch ist empfängerseitig eine Abschätzung darüber möglich, ob noch weitere Übertragungsversuche in weiteren Zeitschlitzen folgen.

Gemäß einem vorteilhaften Ausführungsbeispiel wird vorgeschlagen, dass zumindest zwei Erkennungsbitfolgen und zwei Nutzdatenpakete zeitlich unmittelbar aufeinanderfolgend versendet werden. Statt ein Nutzdatenpaket mit Erkennungsbitfolge in jedem der Zeitschlitze auszusenden, ist es alternativ möglich, eine Folge von Paketen mit jeweils kurzer Burst-Präambel und wenigen Nutzdaten in jedem der Pakete zu übertragen. In diesem Fall wird jeder Zeitschlitz ausgenutzt, die Menge der zu übertragenden Daten ist dabei gering, die Übertragungslatenz wird aber verkürzt.

Gemäß einem vorteilhaften Ausführungsbeispiel wird vorgeschlagen, dass senderseitig erfasst wird, bei welchem Zeitschlitz der Empfänger die Nutzdaten empfangen hat (z.B. anhand der ACK Nachricht) und dass darauffolgende Sendungen zu dem hierzu korrespondierenden Zeitschlitz beginnen. Bei dem obigen Beispiel ist das Aufwachintervall z.B. in drei zeitschlitze unterteilt. Wenn bei einer Übertragung anhand einer Empfangsbestätigungsnachricht des Empfängers im Sender festgestellt wird, dass der Empfänger die Erkennungsbitfolge z.B. im zweiten Zeitschlitz empfangen hat, so kann der Sender, wenn er an diesen Empfänger erneut Nutzdaten übertragen möchte, beispielsweise erst in dem Aufwachintervall, in dem im zweiten Zeitschlitz die Burst-Präambel versendet wird, versuchen, die Erkennungsbitfolge an den Empfänger zu senden. Dabei kann der Sender die Zeitschlitze über einen größeren Zeitraum fortschreiben und bei zukünftigen Sendeversuchen nicht mit dem ersten oder einem beliebigen Zeitschlitze starten, sondern den Zeitschlitz zuerst wählen, bei dem der Sendeversuch zuvor Erfolg hatte.

Geräte der Heimautomatisierung können ein zentrales Steuergerät und/oder Sensoren und/oder Aktoren sein.

Ein Sensor kann beispielsweise ein Schalter, ein Bewegungsmelder, ein Taster, ein Türkontakt, ein Thermostat, ein Fensterkontakt, ein Bildsensor, ein Helligkeitssensor, ein Temperatursensor, ein Binärsensor, ein Mikrofon, oder eine andere Einrichtung zum Erfassen von Umweltveränderungen sein.

Ein Aktor kann insbesondere ein Relais, ein Ventil, ein Motor, ein Stellmotor, ein Dimmer, eine Rolladensteuerung, ein Schalter, ein Signalgeber, ein Infrarotsignalgeber, ein akustischer Signalgeber, ein Bedienteil, ein Informationsterminal oder ein sonstiges Gerät zum Durchführen von Schaltvorgängen, Steuervorgängen, Regelvorgängen oder sonstigen Aktionen und/oder zum Ausgeben von Informationen und Zuständen sein.

Ein zentrales Steuergerät (Server, Smart Home Controller SHC) kann ein zentral angeordneter Rechner sein, der Steuerfunktionen übernimmt. Dieser kann Parameter für die Konfiguration von Sensoren und Aktoren überarbeiten und aussenden. Der Server kann beispielsweise mit einem Weitverkehrsnetz verbunden sein. Hierbei ist es beispielsweise möglich, dass der Server über einen entsprechenden Router mit einem Weitverkehrsnetz, beispielsweise einem TCP/IP basiertes Weitverkehrsnetz verbunden ist. Insbesondere kann es möglich sein, auf den Server über das Weitverkehrsnetz zuzugreifen und aus der Ferne Konfigurationen vorzunehmen. Der Server kann dergestalt sein, dass er lediglich zu Konfigurationszwecken mit Sensoren und Aktoren kommuniziert.

Das Heimautomatisierungssystem kann darüber hinaus so ausgelegt sein, dass eine Kommunikation zwischen Sensoren und Aktoren zur Steuerung in Reaktion auf Ereignisse erfolgt, ohne dass der Server zwischengeschaltet ist. Hierdurch lässt sich eine autarke Heimautomatisierung realisieren, die auch ohne einen Server funktioniert. Dies ist jedoch nur dann sicher möglich, wenn ein Netzwerkschlüssel für die Verschlüsselung von Kommunikation bei den Geräten bekannt ist. Eine Kommunikation zwischen einem Sensor und einem Aktor wird beispielsweise bei einem Ereignis an einem Sensor notwendig, bei welchem Ereignis der Aktor eine Aktion durchführen soll.

Am Eingang des Gerätes kann gegenständlich ein Ereignis detektiert werden. Ein Ereignis kann eine Benutzerinteraktion, beispielsweise das Betätigen eines Schalters oder Tasters, eine Veränderung von Umweltbedingungen, eine Bewegung, ein Öffnen eines Fensters, eine Temperaturänderung oder eine sonstige Veränderung von Umgebungsbedingungen sein.

Beim Detektieren eines Ereignisses kann das Gerät, bevorzugt ein eingespeistes (akkumulatorbetriebenes) Gerät, aufwachen und in einen Aktivmodus versetzt werden. Gegenständlich ist es möglich, dass das Gerät im Normalzustand in einem Ruhezustand (Schlafmodus) ist. In diesem Ruhezustand wird lediglich der Eingang auf das Auftreten eines Ereignisses überwacht. Sämtliche weitere Funktionen können entweder deaktiviert oder mit einer minimalen Leistungsaufnahme aufrechterhalten werden. Insbesondere kann die Kommunikation über eine Kommunikationsschnittstelle in diesen Zeiträumen ruhen, so dass weder Signale ausgesendet, noch Signale empfangen werden.

Beim Detektieren eines Ereignisses kann das Gerät erwachen (in den Aktivmodus wechseln), derart, dass der Prozessor aktiviert wird und die Kommunikationsschnittstelle zur Kommunikation mit der Außenwelt aktiviert wird. Das Gerät wird zum Sender und versucht, in den Nutzdaten eine Nachricht (z.B. einen Steuerbefehl) an ein weiteres Gerät übertragen werden. Dieses weitere Gerät kann ein Aktor sein. Auch dieses weitere Gerät kann sich in einem Schlafmodus befinden. Um dieses weitere Gerät "aufzuwecken" wird das oben beschriebene Senden der Erkennungsbitfolge und das zeitweise Aufwachen des Empfänger in einem Aufwachintervall vorgeschlagen.

Der Prozessor kann beispielsweise ein digitaler Signalprozessor (DSP) sein. Auch kann der Prozessor ein Mikrocontroller sein. Der Prozessor kann ein beliebiger Mikroprozessor sein, der zum Einen zum Auswerten von Eingangssignalen und zum Anderen zum Ausgeben von Steuerungssignalen eingerichtet ist.

Die Kommunikationsschnittstelle kann beispielsweise eine Einrichtung zur Kommunikation über ein Drahtlosnetzwerk sein. Auch kann die Kommunikationsschnittstelle über ein drahtgebundenen Netzes kommunizieren. Beispielsweise kann eine Kommunikation über LAN, WLAN, Bluetooth oder dergleichen erfolgen. Insbesondere kann die Kommunikationsschnittstelle beispielsweise bei einer Frequenz von 868Mz mit einem Frequenz Shift Key Nachrichten aussenden. Insbesondere sind Datenraten von 10KB/s möglich.

Die Kommunikation mittels der Kommunikationsschnittstelle kann eine bidirektionale Kommunikation auf einem Bus, insbesondere einem Funkbus sein. Die Kommunikationsschnittstelle kann zur Verschlüsselung der übertragenen Daten eingerichtet sein. Die Kommunikation über die Kommunikationsschnittstelle kann im Multicast als auch im Unicast Modus erfolgen.

Die zuvor genannten Verfahren können auch als Computerprogramm oder als auf einem Speichermedium gespeichertes Computerprogramm realisiert werden. Hierbei kann sensorseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar.
Nachfolgend wird der Gegenstand anhand einer Ausführungsbeispiele zeigenden Zeichnung näher erläutert.
- Fig. 1: zeigt schematisch ein Gerät, das als Sensor gebildet ist;
- Fig. 2: zeigt schematisch ein Gerät, das als Aktor gebildet ist;
- Fig. 3: zeigt einen schematischen Aufbau eines Heimautomatisierungssystems;
- Fig. 4a: zeigt einen zeitlichen Ablauf der Empfangstätigkeit eines Aktors 12;
- Fig. 4b: zeigt einen zeitlichen Ablauf der Sendetätigkeit eines Sensor 2;
- Fig. 5: zeigt den Aufbau einer Erkennungsbitfolge zusammen mit Nutzdaten.

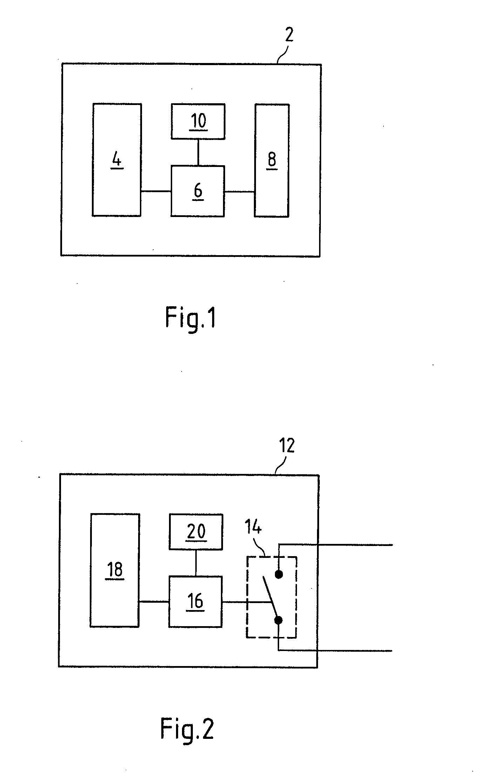

Fig. 1 zeigt schematisch einen Sensor 2 mit einem Tasterfeld 4, welches als Eingang zum Detektieren von Ereignissen verwendet wird. In dem Sensor 2 ist darüber hinaus ein Prozessor 6 angeordnet, zum Auswerten der detektierten Ereignisse an dem Tasterfeld 4. In dem Sensor 2 ist auch eine Funkschnittstelle 8 vorgesehen, welche über den Prozessor 6 angesteuert wird. Mittels der Funkschnittstelle 8 ist es möglich, über ein Funkprotokoll Nachrichten auszusenden und zu empfangen. Die Funkschnittstelle 8 ermöglicht eine Kommunikation über eine Luftschnittstelle. Mittels der Funkschnittstelle 8 ist eine Kommunikation nach einem Burst-Wakeup Verfahren, wie es beansprucht ist, und nachfolgend beschrieben wird, möglich.

Ferner ist in dem Sensor 2 ein Speicher 10 angeordnet. In dem Speicher 10 können temporäre Schlüssel und Netzwerkschlüssel gespeichert werden. Mit Hilfe des Sensors 2 ist es möglich, Ereignisse zu erfassen und in entsprechende Nachrichten umzusetzen.

Der Sensor 2 ist energetisch eigengespeist und ist regelmäßig in einem Schlafmodus. Nur bei einem Ereignis wacht der Sensor 2 auf und überträgt Nutzdaten nach einem gegenständlichen Burst-Wakeup Verfahren, wie nachfolgend beispielhaft beschrieben. Der Sensor 2 kann aber auch ein Nachrichtenempfänger sein, so dass der Sensor 2 auch während des Schlafmodus regelmäßig in einem Aufwachintervall kurzzeitig überprüft, über eine Burst-Präambel gesendet wird.

Fig. 2 zeigt einen Aktor 12. Der Aktor 12 weist einen Ausgang 14 auf, über den beispielsweise elektrische Verbraucher gesteuert werden können. Zu erkennen ist, dass in dem dargestellten Beispiel der Ausgang 14 mit einem Schalter verbunden ist, über den elektrische Kontakte am Ausgang 14 kurz geschlossen oder getrennt werden können. Der Ausgang 14 bzw. der Schalter wird über einen Prozessor 16 angesteuert, der ebenfalls in dem Aktor 12 angeordnet ist. Der Prozessor 16 ist mit einer Funkschnittstelle 18 verbunden. Über die Funkschnittstelle 18 können Daten über die Luftschnittstelle beispielsweise mit der Funkschnittstelle 8 als auch mit einem zentralen Server ausgetauscht werden. Die Funkschnittstelle 8 ermöglichst es dem Aktor 12, Daten zu senden und zu empfangen.

Der Aktor 12 ist energetisch eigengespeist und ist regelmäßig in einem Schlafmodus. Während des Schlafmodus wacht der Aktor regelmäßig in einem Aufwachintervall kurzzeitig auf und überprüft, über eine Burst-Präambel gesendet wird. Wenn keine solche Präambel empfangbar ist, kehrt der Aktor 12 wieder in den Schlafmodus zurück. Anderenfalls ist der Aktor 12 eingerichtet, die Nutzdaten zu empfangen und auszuwerten.

Schließlich ist in dem Aktor 12 ein Speicher 20 angeordnet, in dem temporäre Schlüssel und Netzwerkschlüssel gespeichert sein können.

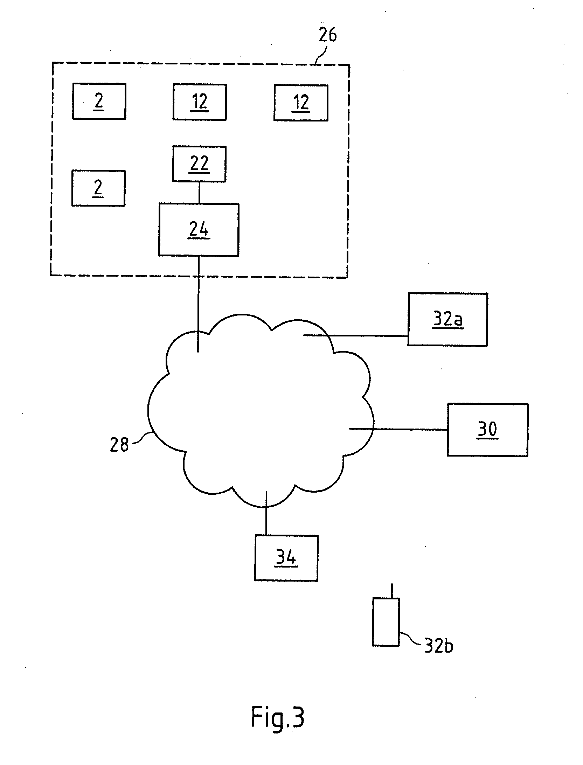

Die in Fig. 1 und 2 gezeigten Sensoren 2 und Aktoren 12 lassen sich in einem in Fig. 3 gezeigten Heimautomatisierungssystem einsetzen. Fig. 3 zeigt beispielsweise die Umgebung 26 eines Hauses oder einer Wohnung. In dieser Umgebung 26 ist ein Router 24 vorgesehen, der eine Kommunikationsverbindung mit dem Internet 28 zur Verfügung stellt und Datenpakete in das Internet 28 aussendet und aus dem Internet 28 empfangen kann. An den Router 24 ist ein Server 22 (Smart Home Controller SHC) angeschlossen. Über den Router 24 kann der SHC 22 Datenpakete mit dem Internet 28 austauschen. Der SHC 22 kann über eine Funkverbindung eine Kommunikation mit den Sensoren 2 als auch den Aktoren 12 aufbauen. Die Kommunikation kann bidirektional sein und auf Anforderungen erfolgen.

An das Internet 28 ist eine zentrale Verwaltungseinheit 30 angeschlossen. Die zentrale Verwaltungseinheit 30 kann über das Internet 28 und den Router 24 eine Kommunikation mit dem SHC 22 aufnehmen, um beispielsweise eine Konfiguration der Sensoren 2, der Aktoren 12 oder des SHCs 22 vorzunehmen.

Die Konfiguration des SHCs 22 als auch der Sensoren 2 und der Aktoren 12 über das Internet 28 kann beispielweise von einem privaten Personalcomputer 32a erfolgen. Hierzu kann der Personalcomputer 32a beispielsweise eine Verbindung über das Internet 28 mit der zentralen Verwaltungseinheit 30 aufbauen und mittels der zentralen Verwaltungseinheit 30 eine Konfiguration des SHCs 22, des Sensors 2 oder des Aktors 12 vornehmen. Diese Konfigurationsänderung kann dann über das Internet 28 von der zentralen Verwaltungseinheit 30 über den Router 24 zu dem SHC 22 übermittelt werden. Auch kann eine Konfiguration beispielsweise über ein Mobiltelefon 32b erfolgen, wobei das Mobiltelefon 32b über ein Gateway 34 mit dem Internet 28 verbunden ist und über das Gateway 34 eine Verbindung mit der zentralen Verwaltungseinheit 30 aufnehmen kann.

Eine sichere Kommunikation zwischen dem SHC 22 und der zentralen Verwaltungseinheit 30 kann beispielsweise dadurch gewährleistet sein, dass der SHC 22 mittels des Routers 24 einen Kommunikationstunnel durch das Internet 28 mit der zentralen Verwaltungseinheit 30 aufbaut, sobald der SHC 22 mit dem Router 24 verbunden wird. Hierzu muss der SHC 22 lediglich die feste IP-Adresse der zentralen Verwaltungseinheit 30 kennen und mittels eines Kennworts und eines Schlüssels die Kommunikation mit der zentralen Verwaltungseinheit 30 verschlüsseln. Über diese verschlüsselte Verbindung kann nun von der zentralen Verwaltungseinheit 30 eine Konfiguration des SHCs 22, des Sensors 2 als auch des Aktors 12 erfolgen. Die Konfiguration kann von dem Personalcomputer 32a oder dem Mobiltelefon 32b gesteuert werden. Auch ist es möglich, mittels des Personalcomputers 32a als auch des Mobiltelefons 32b Ereignisse am Sensor 2 zu generieren, um somit bestimmte Aktionen der Aktoren 12 auszulösen. Auch können Status von den Sensoren 2 und den Aktoren 12 so abgefragt werden.

Die Kommunikation zwischen SHC 22, Aktoren 12 und Sensoren 2 ermöglicht zum Einen die Konfiguration der Sensoren 2 und der Aktoren 12 als auch die Steuerung von an den Aktor 12 angeschlossenen elektrischen Verbrauchern mittels der Sensoren 2. Die Aktor-Steuerung wird durch Verknüpfungen zwischen einem Sensor 2 und Aktoren 12 als auch durch Sensor-Parameter und/oder Aktor-Parameter reguliert.

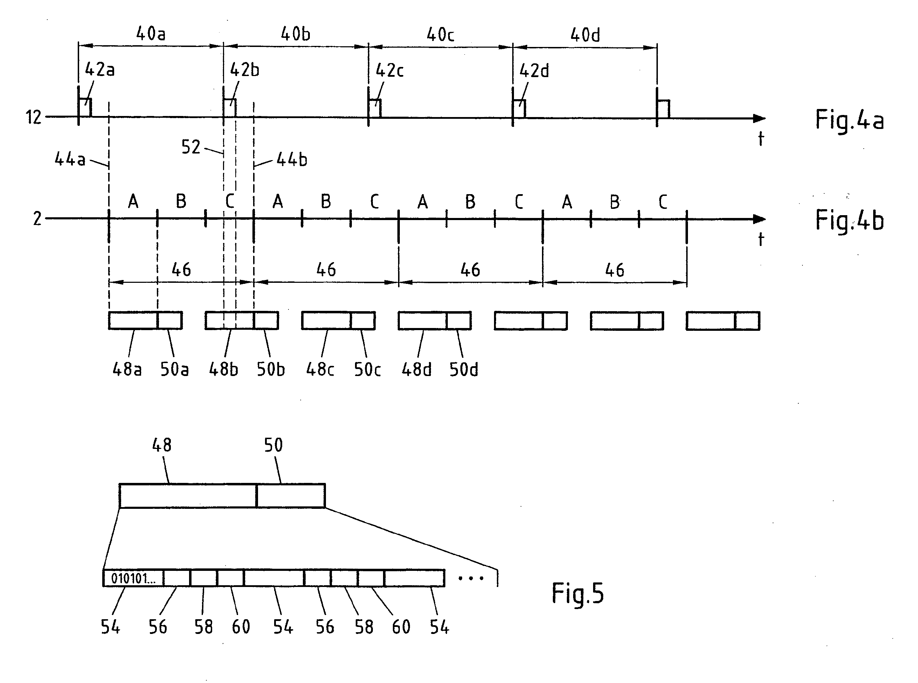

Fig. 4a zeigt den zeitlichen Ablauf einer Empfangstätigkeit eines Aktors 12. Über die Zeitachse t sind vier Aufwachintervalle 40a, 40b, 40c und 40d aufgezeichnet. In jedem der Aufwachintervalle 40 wacht der Aktor 12 für einen kurzen Zeitraum 42a-d auf, in dem die Funkschnittstelle 18 des Aktors 2 auf dem Funkkanal lauscht, ob eine Wakeup-Präambel vorliegt. Zu erkennen ist in der Fig. 4a, dass diese Zeiträume 42 beispielhaft jeweils zu Beginn eines Aufwachintervalls 40 liegen. Jedoch ist es auch möglich, dass die Zeiträume 42 zu beliebigen Zeitpunkten in dem Aufwachintervall 40 stattfinden. Wichtig ist nur, dass jeweils ein Aufwachzeitraum 42 in jedem Aufwachintervall 40 zu dem gleichen Zeitpunkt stattfinden. Außerhalb der Zeiträume 42 ist der Aktor in einem Schlafmodus und nicht in der Lage, Nachrichten zu empfangen. Das führt dazu, dass der Aktor 12 nur zu den Zeiträumen 42 einen erhöhten Energiebedarf hat und in den übrigen Zeiträumen der Energiebedarf auf ein Minimum reduziert sein kann.

Fig. 4b zeigt den zeitlichen Ablauf der Sendetätigkeit eines Sensors 2. Auch hier ist über die Zeitachse t die Sendetätigkeit aufgetragen.

Wie zu erkennen ist, sind drei Zeitschlitze A, B, C vorgesehen, wobei in jedem dieser Zeitschlitze A, B, C eine Burst-Präambel 48 übertragen werden kann. Zu erkennen ist auch, dass die Dauer 46 der Zeitschlitze A+B+C der Dauer des Aufwachintervalls 40 entspricht. Ferner ist anhand der gestrichelten Linien 44a, 44b zu erkennen, dass zwischen dem Beginn der Zeitschlitze A, B, C und dem Beginn eines Aufwachintervalls 40 keine Korrelation besteht. Hierzu sei angemerkt, dass auf Seiten des Sensors 2 keine Kenntnisse über den Zeitpunkt bestehen müssen, zu welchem ein Aktor 12 aufwacht. Es muss lediglich ein Kenntnis über die Länge/Dauer eines Aufwachintervalls 40 vorliegen.

Ferner ist in der Fig. 4b zu erkennen, dass die Dauer 46 die der Dauer des Aufwachintervalls 40 entspricht, in drei Zeitschlitze A, B, C, die jeweils gleich lang sind, unterteilt ist. In jedem der Zeitschlitze A, B, C kann eine Erkennungsbitfolge 48a, b, c übertragen werden. Um zu erreichen, dass der Aktor 12 in zumindest einem der Zeitschlitze A, B, C aufgewacht ist, und das Vorliegen einer Erkennungsbitfolge überwacht, ist die Länge der Zeitschlitze A, B, C so gewählt, dass diese zumindest so lang ist, dass deren Summe der Dauer des Aufwachintervalls 40 entspricht.

Wie in der Fig. 4b zu erkennen ist, wird für die Übertragung von Nutzdaten 50, zum Beispiel beim Eintreten eines Ereignisses am Sensor 2, zunächst im Zeitschlitz A die Erkennungsbitfolge 48a und unmittelbar im Anschluss die Nutzdaten 50a übertragen. Anschließend wird im Zeitschlitz C erneut die Erkennungsbitfolge 48b und die den Nutzern 50a entsprechende Nutzdaten 50b übertragen. Dann wird im Zeitschlitz B erneut die Erkennungsbitfolge 48c und die Nutzdaten 50c übertragen. Wie zu erkennen ist, ist somit in jedem Zeitschlitz A, B, C zumindest einmal eine Erkennungsbitfolge 40 übertragen worden. Da die Dauer der Zeitschlitze A, B, C zumindest genauso lang ist, wie ein Aufwachintervall 40, wird durch dieses Übertragen sichergestellt, dass zumindest einmal während der Übertragung der Erkennungsbitfolge 48 in den Zeitschlitzen A oder B oder C der Aktor 12 das Vorliegen der Erkennungsbitfolge 48 überwacht.

Im vorliegenden Beispiel ist dies zum Zeitpunkt der Übertragung der Erkennungsbitfolge 48b im Zeitschlitz C der Fall, wie durch die gestrichelte Linie 52 angedeutet ist. Im Zeitraum 42b erkennt der Aktor 12, dass eine Erkennungsbitfolge 48b übertragen wurde. Dies ist seitens des Aktors 12 auch möglich, wenn nur ein Teil der Erkennungsbitfolge 48b empfangen wird.

Die Erkennungsbitfolge 48 ist aus einem regelmäßigen Bitfolgemuster zusammengesetzt, so dass der Empfänger auch bei Empfang nur eines Teils des Bitmusters das Vorliegen der Erkennungsbitfolge erkennen kann.

Der Aktor 12 wird nach dem Empfang der Erkennungsbitfolge 48b aktiviert und kann die Nutzdaten im Datenpaket 50b empfangen.

Die Erkennungsbitfolge kann neben dem regelmäßigen Bitmuster noch weitere Informationen enthalten, wie dies in Fig. 5 dargestellt ist. In der Fig. 5 ist zu erkennen, dass die Erkennungsbitfolge 48 ein regelmäßiges Bitmuster 54, beispielsweise 101010 enthalten kann. Im Anschluss daran kann beispielsweise eine Information 56 über die verbleibende Restdauer der Erkennungsbitfolge 48 vorhanden sein. Anhand dieser Information ist es seitens des Empfängers möglich, für den Rest der Erkennungsbitfolge 48 in den Schlafmodus zurückzuwechseln und erst zu Beginn der Nutzdaten 50 wieder aufzuwachen.

Darüber hinaus kann eine Sequenznummer 58 vorhanden sein. Die Sequenznummer 58 kann angeben, in welcher Zeitschlitz (A=1, B=2, C=3) die aktuelle Übertragung der Erkennungsbitfolge 48 erfolgt. Schließlich ist es auch möglich, eine Zieladresse 60 anzugeben, mit dessen Hilfe der Empfänger feststellen kann, ob die nachfolgenden Nutzdaten 50 für den Empfänger bestimmt sind oder nicht.

Wie in der Fig. 5 zu erkennen ist, wiederholen sich die Informationen 54-60 in einer Erkennungsbitfolge 48. Wichtig ist, dass für die Übertragung der Informationen 56, 58, 60 nur eine Dauer benötigen, die erheblich kürzer ist, als der Zeitraum 42, da im Zeitraum 42 der Empfänger zumindest einen Teil der Bitfolge 54 empfangen muss, um festzustellen, dass es sich bei dem Empfang um eine Erkennungsbitfolge 48 handelt.

## Patentansprüche

1. Verfahren zum Betreiben eines Gerätes, insbesondere eines Gerätes eines Gebäudeautomatisierungssystems, umfassend,
- Erzeugen einer Erkennungsbitfolge (48),
- erstes Senden der Erkennungsbitfolge (48) in einem ersten Zeitschlitz (A, B, C) und zumindest zweites Senden der Erkennungsbitfolge (48) in einem zweiten, zeitlich von dem ersten Zeitschlitz (A, B, C) entfernten Zeitschlitz (A, B, C), wobei
- die Dauer des Sendens der Erkennungsbitfolge (48) kürzer als ein Aufwachintervall (40) eines Empfängers ist und
- die Dauer (46) des Sendens der Summe der ersten und zumindest zweiten Erkennungsbitfolge (48) zumindest der Dauer des Aufwachintervalls des Empfängers entspricht, **dadurch gekennzeichnet,**
- **dass** zwischen den jeweiligen Zeitschlitzen keine Übertragung einer Erkennungsbitfolge stattfindet, und
- die Dauer der Zeitschlitze (A, B, C) der Dauer des Sendens der Erkennungsbitfolge (48) entspricht.

2. Verfahren nach Anspruch 1, **dadurch gekennzeichnet, dass** unmittelbar im Anschluss an das erste Senden und das zweite Senden zumindest ein Nutzdatenpaket (50) gesendet wird, wobei die Dauer des Sendens der Nutzdaten (50) kürzer als der zeitliche Abstand zwischen den Zeitschlitzen ist.

3. Verfahren nach Anspruch 1 oder 2, **dadurch gekennzeichnet, dass** ein Aufwachintervall (40) in zumindest N Zeitschlitze (A, B, C) (N ∈ IN) unterteilt wird und dass in zumindest N-1 aufeinanderfolgenden Aufwachintervallen (40) permutierend jeweils nur in einem oder zwei der N Zeitschlitze (A, B, C) ein Senden der Erkennungsbitfolge (48) erfolgt.

4. Verfahren nach einem der Ansprüche 1 bis 3, **dadurch gekennzeichnet, dass** den Nutzdatenpakten (50) Sequenznummern zugeordnet werden, wobei pro Sendung eines Nutzdatenpakets (50) eine neue Sequenznummer dem Nutzdatenpaket (50) zugeordnet und versendet wird.

5. Verfahren nach einem der Ansprüche 1 bis 4, **dadurch gekennzeichnet, dass** beim Empfang einer Empfangsbestätigungsnachricht von einem Empfänger keine weiteren Erkennungsbitfolgen für den Versand des empfangenen Nutzdatenpakets gesendet werden.

6. Verfahren nach einem der Ansprüche 1 bis 5, **dadurch gekennzeichnet, dass** einem Nutzdatenpaket (50) eine oder eine Mehrzahl von Zieladressen (60) zugeordnet und versendet werden.

7. Verfahren nach einem der Ansprüche 1 bis 6, **dadurch gekennzeichnet, dass** einem Nutzdatenpaket (50) eine Wertigkeit zugeordnet wird und dass abhängig von der Wertigkeit die Anzahl der Zeitschlitze (A, B, C) pro Aufwachintervall (40) variiert wird.

8. Verfahren nach einem der Ansprüche 1 bis 7, **dadurch gekennzeichnet,**
- **dass** die Dauer der Zeitschlitze (A, B, C) sowie die Länge der Erkennungsbitfolge (48) variabel ist und/oder
- **dass** der Abstand zwischen den Zeitschlitzen (A, B, C) äquidistant oder variabel ist und/oder
- **dass** die Anzahl der Zeitschlitze (A, B, C), deren Summe zumindest der Dauer des Aufwachintervalls (40) entspricht, variabel ist.

9. Verfahren nach einem der Ansprüche 1 bis 8, **dadurch gekennzeichnet**, die Erkennungsbitfolge (48) Zusatzinformationen aus der Gruppe:
- Verbleibende Dauer (56) der Erkennungsbitfolge (48) bis zum Beginn des Nutzdatenpakets (50), und/oder
- die laufende Nummer (58) des Zeitschlitzes, enthält.

10. Verfahren nach einem der Ansprüche 1 bis 9, **dadurch gekennzeichnet**, zumindest zwei Erkennungsbitfolgen (48) und zwei Nutzdatenpakete (50) zeitlich unmittelbar aufeinanderfolgend versendet werden.

11. Verfahren nach einem der Ansprüche 1 bis 10, **dadurch gekennzeichnet, dass** senderseitig erfasst wird, bei welchem Zeitschlitz (A, B, C) der Empfänger die Nutzdaten (50) empfangen hat und dass darauffolgende Sendungen mit dem hierzu korrespondierenden Zeitschlitz beginnen.

12. System, insbesondere Gebäudeautomatisierungssystems, umfassend, einen Sender insbesondere Sender eines Gebäudeautomatisierungssystems, umfassend,
- Mittel zum Erzeugen einer Erkennungsbitfolge (48),
- einen Mikroprozessor eingerichtet zum Senden der Erkennungsbitfolge (48) in einem ersten Zeitschlitz (A, B, B) und zum Senden zumindest der Erkennungsbitfolge (48) in einem zweiten, zeitlich von dem ersten Zeitschlitz entfernten Zeitschlitz (A, B, C), wobei
- die Dauer des Sendens der Erkennungsbitfolge (48) kürzer als ein Aufwachintervall (40) eines Empfängers ist und
- die Dauer (46) des Sendens der Summe der ersten und zumindest zweiten Erkennungsbitfolge (48) zumindest der Dauer des Aufwachintervalls (40) des Empfängers entspricht und
- einen Empfänger zum Empfangen der Erkennungsbitfolge (48) und der Nutzdaten (50), wobei der Empfänger zu einem Aufwachzeitraum (42a-d) eines Aufwachintervalls (40) überprüft, ob eine Erkennungsbitfolge (48) gesendet wird und im Rest des Aufwachintervalls (40) in einem Schlafmodus ist, wobei
- in jedem Aufwachintervall (46) jeweils der Aufwachzeitraum (42a-d) zu jeweils einem gleichen Zeitpunkt stattfindet,
**dadurch gekennzeichnet,**
- **dass** zwischen den jeweiligen Zeitschlitzen keine Übertragung einer Erkennungsbitfolge stattfindet, wobei
- die Dauer der Zeitschlitze (A, B, C) der Dauer des Sendens der Erkennungsbitfolge (48) entspricht.

## Claims

1. Method to operate a device, in particular a device of a building automation system, comprising
- generation of an identification bit string (48),
- first transmission of the identification bit string (48) in a first time slot (A, B, C) and at least second transmission of the identification bit string (48) in a second time slot (A, B, C) that is remote in time from the first time slot (A, B, C), wherein
- the duration of the transmission of the identification bit string (48) is shorter than an awake interval (40) of a receiver and
- the duration (46) of the transmission of the sum of the first and at least the second identification bit string (48) corresponds to at least the duration of the awake interval of the receiver,
**characterised in that**,
- no transfer of an identification bit string takes place between the respective time slots, and
- the duration of the time slots (A, B, C) corresponds to the duration of the transmission of the identification bit string (48).

2. Method according to claim 1, **characterised in that**, at least one user data packet (50) is transmitted directly following the first transmission and the second transmission, wherein the duration of the transmission of the user data (50) is shorter than the distance in time between the time slots.

3. Method according to claim 1 or 2, **characterised in that**, an awake interval (40) is divided into at least N time slots (A, B, C) (N ∈ IN) and that a transmission of the identification bit string (48) occurs in at least N-1 consecutive awake intervals (40), permuting only in one or two of the N time slots (A, B, C) respectively.

4. Method according to one of claims 1 to 3, **characterised in that** sequence numbers are allocated to the user data packets (50), wherein a new sequence number is allocated to the user data packet (50) per transmission of a user data packet (50) and is transmitted.

5. Method according to one of claims 1 to 4, **characterised in that**, on receiving an acknowledgement of receipt message from a receiver, no further identification bit strings are transmitted for the dispatch of the received user data packet.

6. Method according to one of claims 1 to 5, **characterised in that** one or a plurality of destinations (60) are allocated to a user data packet (50) and are transmitted.

7. Method according to one of claims 1 to 6, **characterised in that** a valence is allocated to a user data packet (50) and that, depending on the valence, the number of time slots (A, B, C) per awake interval (40) is varied.

8. Method according to one of claims 1 to 7, **characterised in that**
- the duration of the time slots (A, B, C) as well as the length of the identification bit string (48) is variable and/or
- that the distance between the time slots (A, B, C) is equidistant or variable and/or
- the number of time slots (A, B, C), the sum of which corresponds at least to the duration of the awake interval (40), is variable.

9. Method according to one of claims 1 to 8, **characterised in that** the identification bit string (48) contains additional information from the group:
- remaining duration (56) of the identification bit string (48) to the beginning of the user data packet (50), and/or
- the current number (58) of time slots.

10. Method according to one of claims 1 to 9, **characterised in that** at least two identification bit strings (48) and two user data packets (50) are transmitted directly consecutively in time.

11. Method according to one of claims 1 to 10, **characterised in that** on the transmitter side is detected in which time slot (A, B, C) the receiver has received the user data (50) and that following transmissions begin with the time slot corresponding to this.

12. System, in particular building automation system, comprising, a transmitter, in particular transmitter of a building automation system, comprising,
- means to generate an identification bit string (48),
- a microprocessor set up to transmit the identification bit string (48) in a first time slot (A, B, B) and to transmit at least the identification bit string (48) in a second time slot (A, B, C) that is remote in time from the first time slot, wherein
- the duration of the transmission of the identification bit string (48) is shorter than an awake interval (40) of a receiver and
- the duration (46) of the transmission of the sum of the first and at least the second identification bit string (48) corresponds at least to the duration of the awake interval (40) of the receiver and
- a receiver to receive the identification bit string (48) and the user data (50) wherein, at an awake period (42a-d) of an awake interval (40), the receiver checks whether an identification bit string (48) is transmitted and is in a sleep mode for the remainder of the awake interval (40), wherein
- the respective awake period (42a-d) takes place at the same point in time respectively in each awake interval (46),
**characterised in that**,
- no transfer of an identification bit string takes place between the respective time slots, wherein
- the duration of the time slots (A, B, C) corresponds to the duration of the transmission of the identification bit string (48).

## Revendications

1. Procédé d'exploitation d'un appareil, en particulier d'un appareil d'un système immotique, comprenant
- la génération d'une séquence binaire d'identification (48),
- une première émission d'une séquence binaire d'identification (48) dans une première tranche de temps (A, B, C) et au moins une deuxième émission de la séquence binaire d'identification (48) dans une deuxième tranche de temps (A, B, C) éloigné dans le temps de la première tranche de temps (A, B, C), sachant que
- la durée de l'émission de la séquence binaire d'identification (48) est plus courte qu'un intervalle actif (40) d'un récepteur et
- la durée (46) de l'émission de la somme de la première et d'au moins la deuxième séquence binaire d'identification (48) correspond au moins à la durée de l'intervalle actif du récepteur,
**caractérisé en ce que,**
- entre les tranches de temps (A, B, C) respectives, aucune transmission de séquence binaire d'identification (48) n'a lieu et
- la durée des tranches de temps (A, B, C) correspond à la durée de l'émission de la séquence binaire d'identification (48).

2. Procédé selon la revendication 1,
**caractérisé en ce que**, directement après la première émission et la deuxième émission, au moins un paquet de données utiles (50) est émis, sachant que la durée de l'émission des données utiles (50) est plus courte que l'intervalle temporel entre les tranches de temps.

3. Procédé selon revendication 1 ou 2,
**caractérisé en ce qu**'un intervalle actif (40) est divisé en au moins N tranches de temps (A, B, C) (N ∈ IN) et qu'une émission de la séquence binaire d'identification (48) a lieu dans au moins N- 1 intervalles actifs (40) consécutifs, en permutant chaque fois dans une ou deux des N tranche de temps (A, B, C).

4. Procédé selon l'une des revendications 1 à 3,
**caractérisé en ce que** des numéros de séquences sont associés aux données utiles (50), sachant que, pour chaque émission d'un paquet de données utiles (50), un nouveau numéro séquentiel est associé au paquet de données utiles (50) et émis.

5. Procédé selon l'une des revendications 1 à 4,
**caractérisé en ce que**, lors de la réception d'un message d'accusé de réception par un récepteur, aucune autres séquences binaires d'identification ne sont émises pour l'émission du paquet de données utiles reçu.

6. Procédé selon l'une des revendications 1 à 5,
**caractérisé en ce qu**'une ou plusieurs adresses de destination (60) sont associées à un paquet de données utiles (50) et émises.

7. Procédé selon l'une des revendications 1 à 6,
**caractérisé en ce qu**'une valeur est associée à un paquet de données utiles (50) et que le nombre des tranche de temps (A, B, C) par intervalle actif (40) est varié en fonction de la valeur.

8. Procédé selon l'une des revendications 1 à 7,
**caractérisé en ce que**
- la durée des tranches de temps (A, B, C) ainsi que la longueur des séquences binaires d'identification (48) sont variables et / ou
- l'intervalle entre les tranches de temps (A, B, C) est équidistant ou variable et / ou
- Le nombre des tranches de temps (A, B, C), dont la somme correspond au moins à la durée de l'intervalle actif (40), est variable.

9. Procédé selon l'une des revendications 1 à 8,
**caractérisé en ce que** la séquence binaire d'identification (48) contient
- des informations supplémentaires appartenant au groupe de durée constante (56) de la séquence binaire d'identification (48) jusqu'au début du paquet de données utiles (50), et / ou
- le numéro courant (58) de la tranche de temps.

10. Procédé selon l'une des revendications 1 à 9,
**caractérisé en ce que** deux séquences binaires d'identification (48) et deux paquets de données utiles (50) au moins sont émises dans le temps directement les unes à la suite des autres.

11. Procédé selon l'une des revendications 1 à 10,
**caractérisé en ce que**, côté émetteur, on détecte dans quelle tranche de temps (A, B, C) le récepteur a reçu les données utiles (50) et que les émissions suivantes commencent avec la tranche de temps y correspondant.

12. Système, en particulier système immotique, qui est doté d'un émetteur, en particulier d'un émetteur d'un système immotique comprenant :
- des moyens destinés à générer une séquence binaire d'identification (48),
- un microprocesseur aménagé pour émettre la séquence binaire d'identification (48) dans une première tranche de temps (A, B, C) et pour émettre au moins la séquence binaire d'identification (48) dans une deuxième tranche de temps (A, B, C), qui est éloignée dans le temps de la première tranche de temps, sachant que
- la durée de l'émission de la séquence binaire d'identification (48) est plus courte qu'un intervalle actif (40) d'un récepteur et
- la durée (46) de l'émission de la somme de la première et d'au moins la deuxième séquence binaire d'identification (48) correspond au moins à la durée de l'intervalle actif (40) du récepteur, et
- un récepteur destiné à recevoir la séquence binaire d'identification (48) et les données utiles (50), sachant que, au cours d'une période active (42a - d) d'un intervalle actif (40), le récepteur vérifie si la séquence binaire d'identification (48) est émise, et est dans un mode de veille pendant le reste de l'intervalle actif (40), sachant que
- dans chaque intervalle actif (40), la période active (42a - d) a lieu, chaque fois, au même moment,
**caractérisé en ce que,**
- entre les tranches de temps respectives, aucune transmission de séquence binaire d'identification n'a lieu, sachant que
- la durée des tranches de temps (A, B, C) correspond à la durée de l'émission de la séquence binaire d'identification (48).
